# EUROPÄISCHE PATENTSCHRIFT

(11) **EP 3 840 992 B1**
(45) Veröffentlichungstag und Bekanntmachung des Hinweises auf die Patenterteilung: **07.05.2025**
(21) Anmeldenummer: 19756149.1
(22) Anmeldetag: 14.08.2019
(51) Int. Cl.: B60T 13/38, B60T 13/68, B60T 17/22, F16D 121/08, F16D 121/10, F16D 121/14

(54) **ELEKTRONISCH GESTEUERTES PNEUMATISCHES BREMSSYSTEM UND VERFAHREN ZUM STEUERN EINES ELEKTRONISCH GESTEUERTEN PNEUMATISCHEN BREMSSYSTEMS**
ELECTRONICALLY CONTROLLED PNEUMATIC BRAKING SYSTEM AND METHOD FOR CONTROLLING AN ELECTRONICALLY CONTROLLED PNEUMATIC BRAKING SYSTEM
SYSTÈME DE FREINAGE PNEUMATIQUE À COMMANDE ÉLECTRONIQUE ET PROCÉDÉ DE COMMANDE D'UN SYSTÈME DE FREINAGE PNEUMATIQUE À COMMANDE ÉLECTRONIQUE

(30) Priorität: 21.08.2018 DE 102018120350
(43) Veröffentlichungstag der Anmeldung: 30.06.2021
(73) Patentinhaber: ZF CV Systems Europe BV, 1170 Brussels (BE)
(72) Erfinder: VAN THIEL, Julian, 30161 Hannover (DE); OTREMBA, Robert, 30952 Ronnenberg (DE)
(74) Vertreter: Rabe, Dirk-Heinrich
(86) Internationale Anmeldenummer: PCT/EP2019/071815
(87) Internationale Veröffentlichungsnummer: WO 2020/038798

(56) Entgegenhaltungen:
- DE-A1- 102010 054 711
- DE-A1- 102017 006 423

## Beschreibung

Die Erfindung betrifft ein elektronisch gesteuertes pneumatisches Bremssystem mit einer elektropneumatische Feststellbremsanordnung mit Federspeicherbremsen an einer Hinterachse und einer weiteren Achse eines Fahrzeugs, insbesondere Nutzfahrzeugs, mit einem Feststellbremsmodul, aufweisend einen Vorratsanschluss zum Anschließen eines Druckluftvorrats, einen ersten Federspeicheranschluss, einer elektropneumatischen Ventileinheit mit wenigstens einem elektropneumatischen Ventil zum Aussteuern eines Federspeicherbremsdrucks an dem ersten Federspeicheranschluss, und eine elektronische Steuereinheit zum Empfangen von Feststellbremssignalen von einem elektronischen Feststellbremsschalter und/oder einer übergeordneten Steuereinheit. Die Erfindung betrifft ferner ein Verfahren zum Steuern eines elektronisch gesteuerten pneumatischen Bremssystems.

Federspeicherbremsen können als Feststellbremsen bzw. Parkbremsen verwendet werden und weisen einen federbelasteten Bremsaktuator auf, der drucklos die Bremse zuspannt, sodass bei einem drucklosen Zustand das Fahrzeugs dieses entsprechend gebremst ist. Zum Lösen der Federspeicherbremsen werden sie mit Druckluft beaufschlagt, sodass die Federspeicherbremsen gegen die Kraft der Feder gelöst werden.

In der Regel verfügen solche elektropneumatischen Feststellbremsmodule daher über einen Vorratsanschluss zum Anschließen eines Druckluftvorrats, und wenigstens einen Federspeicheranschluss zum Anschließen wenigstens eines Federspeicherbremszylinders. Hierbei ist es denkbar, und häufig auch so umgesetzt, dass an einen einzigen Federspeicheranschluss des elektropneumatischen Feststellbremsmoduls sämtliche Federspeicherbremszylinder des Nutzfahrzeugs, insbesondere des Triebwagens einer Triebfahrzeug-Anhänger-Kombination, angeschlossen sind. Es ist auch möglich, dass hierfür separate Anschlüsse vorgesehen sind.

Ein solches, gattungsgemäßes elektropneumatisches Feststellbremsmodul, ist beispielsweise in DE 103 36 611 A1 offenbart. Das dort offenbarte Feststellbremsmodul weist ein Relaisventil auf, welches mit einer Vorsteuereinheit gekoppelt ist, die über ein elektrisch geschaltetes 2/2-Wege-Ventil und ein bistabiles 3/2-Wege-Ventil einen Steuereingang des Relaisventils mit dem Vorratsanschluss verbindet. Das elektrisch gesteuerte 2/2-Wege-Ventil dient zum gepulsten Entlüften des Steuereingangs um die Federspeicher auch zum Hilfsbremsen oder zusätzlichem Einbremsen zu verwenden. Das bistabile 3/2-WegeVentil dient dazu, einen be- oder entlüfteten Zustand des Steuereingangs eines Relaisventils aufrechtzuerhalten, um den Zustand der Federspeicherbremsen aufrechtzuerhalten. Im Fahrbetrieb soll permanent ein Druck an dem Federspeicheranschluss ausgesteuert werden, sodass die Federspeicherbremszylinder gelöst sind. Im abgestellten Zustand des Fahrzeugs allerdings sollen die Federspeicherbremszylinder zugespannt sein, das heißt entlüftet.

Sind nun nicht nur an der Hinterachse Federspeicherbremsen vorgesehen, sondern auch an der weiteren Achse, z.B. Vorderachse, und sollen die Federspeicherbremsen sowohl der Hinterachse als auch der weiteren Achse zum Hilfsbremsen oder Zusatzbremsen genutzt werden, besteht das Problem, dass insbesondere eine Überbremsung an der weiteren Achse stattfindet, wenn die Federspeicherbremsen an der Hinterachse im Falle eines Fehlers der Hinterachsbetriebsbremsansteuerung eingesetzt werden.

Aus EP 1 538 054 A1 ist ein System bekannt, welches mindestens einen Betriebsbremskreis für mindestens eines der Räder an mindestens einer Radachse aufweist, wobei der Betriebsbremskreis durch ein erstes, unter einem ersten Druck stehendes Fluid belastbar ist. Das System weist ferner eine Feststellbremseinrichtung mit mindestens einem Feststellbremskreis für jeweils eines der Laufräder der mindestens einen Radachse auf, wobei der Feststellbremskreis durch ein zweites, unter einem zweiten Druck stehendes Fluid gegen die rücktreibende Kraft mindestens eines federnden Elements entlastbar ist, wobei ein Steuermittel zum Verhindern der Blockierung mindestens eines der Laufräder infolge eines Druckabfalls in dem Feststellbremskreis während des Fahrbetriebs des Kraftfahrzeugs vorhanden ist. Das Steuermittel zur Verhinderung eines Blockierzustandes wirkt auf ein Wechselventil, von welchem ein Eingang mit einem den Betriebsbremskreis an nur einer Seite des Fahrzeugs zugeordneten Ausgangs des Steuermittels und von welchem ein weiterer Eingang mit dem Feststellbremskreis verbunden ist. Das Wechselventil ist dabei so ausgestaltet, dass Fluid aus einer Zuführleitung für den Betriebsbremskreis auch dem Feststellbremskreis zuführbar ist, wenn der Druck in dem Feststellbremskreis niedriger als der Druck in dem Betriebsbremskreis ist. Hierdurch kann vermieden werden, dass Federspeicherbremsen an einer weiteren Achse, wie insbesondere einer Vorder- oder Zusatzachse, zuspannen, wenn der Feststellbremskreis die Federspeicherbremsen der Hinterachse entlüftet.

Aus DE 199 42 533 A1 ist weiterhin eine Feststellbremsvorrichtung für Fahrzeuge bekannt, welche ein Betätigungselement zur Betätigung von Radbremseinrichtungen aufweist. Die Feststellbremsvorrichtung weist eine Blockierschutzsteuereinrichtung auf, welche die Radbremseinrichtungen abhängig von der durch ein Sensormittel erfassten Drehzahl der durch die Radbremseinrichtungen mit einer Feststellbremskraft zu beaufschlagenden Räder derart steuert, dass ein Blockieren der Räder verhindert wird. In diesem System werden also Sensoren eingesetzt, die die Drehzahl messen und hiermit ein Blockieren der Räder erfassen können. Hierbei ist allerdings problematisch, dass je nach auftretendem Fehler, derartige Sensoren eventuell nicht mehr ausgelesen werden können.

Die DE102010054711A1 beschreibt ein Fahrzeug mit einer Luftfederanlage, welche Hebe- und Senkbewegungen des Fahrzeugaufbaus an mehreren Achsen ermöglicht, sowie mit einem Parkbremssystem, welches im Stillstand des Fahrzeuges eine selektive Lösung mindestens einer Achs-Parkbremseinrichtung an mindestens einer Fahrzeugachse erlaubt, so dass Fahrzeugverwindungen bei Hebe- oder Senkbewegungen der Luftfederanlage bei aktiviertem Parkbremssystem verhindert werden können. Hierbei ist mindestens ein Parkbremsventil vorgesehen.

Die DE102017006423A1 offenbart ein Fahrzeug-Feststellbremssystem sowie ein Verfahren zur Steuerung dessen, wobei das Fahrzeug-Feststellbremssystem einen vorderen Feststellbremskreislauf, einen hinteren Feststellbremskreislauf und ein Luftzufuhrsystem, das angeordnet ist, um dem jeweiligen Feststellbremskreislauf Druckluft zuzuführen, umfasst, wobei der vordere Feststellbremskreislauf pneumatische vordere Bremsmittel für die Räder mindestens einer Vorderachse umfasst und der hintere Feststellbremskreislauf pneumatische hintere Bremsmittel für die Räder mindestens einer Hinterachse umfasst. Der vordere Feststellbremskreislauf umfasst eine Ventileinheit, die angepasst ist, um den Luftdruck, der den vorderen Bremsmitteln zugeführt wird, zu regeln, damit er niedriger ist als der Luftdruck, der den hinteren Bremsmitteln zugeführt wird.

Aufgabe der vorliegenden Erfindung ist es, ein elektronisch gesteuertes pneumatisches Bremssystem mit einer elektropneumatische Feststellbremsanordnung in der eingangs genannten Art anzugeben, mittels der wenigstens ein Basisblockierschutz realisiert werden kann, der die Stabilität des Fahrzeugs im Fehlerfall weiterhin sicherstellen kann.

Diese Aufgabe wird in einem ersten Aspekt durch ein elektronisch gesteuertes pneumatisches Bremssystem nach Anspruch 1 gelöst.

Der Erfindung liegt die Erkenntnis zugrunde, dass, wenn nicht nur die Hinterachse des Fahrzeugs mit Federspeicherbremsen ausgestattet ist, sondern auch wenigstens eine weitere Achse, wie insbesondere eine Vorderachse und/oder Zusatzachse, die Entlüftung der Federspeicherbremsen an dieser wenigstens einen weiteren Achse dann vermieden werden sollte, wenn die Federspeicherbremsen der Hinterachse zum Zusatz- und/oder Hilfsbremsen verwendet werden, aber gleichzeitig eine redundante Ansteuerung von Betriebsbremsen der Vorderachse, oder auch eine reguläre Ansteuerung von Betriebsbremsen der weiteren Achse stattfindet. Das heißt, nur in dem Fall, wenn eine Hinterachsbetriebsbremsenansteuerung fehlerhaft ist, und die Federspeicherbremsen der Hinterachse diese Aufgabe redundant übernehmen, sollen die Federspeicherbremsen der wenigstens einen weiteren Achse (Vorderachse und/oder Zusatzachse) entlüftet bleiben, um deren Zuspannen zu verhindern. Zu diesem Zweck ist das Absperrventil vorgesehen, welches in diesem Fall basierend auf einem von dem Feststellbremsmodul bereitgestellten Absperrsignal den zweiten Federspeicheranschluss absperrt, sodass dieser nicht mehr über das Feststellbremsmodul entlüftet werden kann. Hierdurch lässt sich die Stabilität des Fahrzeugs erhöhen.

Die weitere Achse ist vorzugsweise eine Vorderachse und/oder Zusatzachse. Insbesondere bei solchen Achsen können Federspeicherbremsen vorgesehen sein und deren Einlegung, das heißt Entlüften, kann in bestimmten Situationen zum Blockieren der Achse und damit zur Instabilität des Fahrzeugs führen.

Erfindungsgemäß ist die elektronische Steuereinheit dazu ausgebildet, ein Feststellbremssignal zur redundanten Ansteuerung der Hinterachse und der weiteren Achse zu empfangen, und in diesem Fall das Absperrsignal an dem Absperrventil bereitzustellen. Die elektronische Steuereinheit empfängt das Feststellbremssignal vorzugsweise über einen Fahrzeugbus, und/oder über eine direkte Leitung zwischen der elektronischen Steuereinheit und einer weiteren elektronischen Steuereinheit eines weiteren Moduls, wie insbesondere eines Zentralmoduls, eines Moduls für autonomes Fahren, oder eines Achsmodulators der Hinterachse.

In einer ersten Ausführungsform ist vorgesehen, dass an den ersten Federspeicheranschluss auch die Federspeicherbremsen der Hinterachse anschließbar sind. In der Praxis finden sich Feststellbremsmodule, die einen einzigen Federspeicheranschluss haben, an den dann ein T-Stück angeschlossen wird, von dem ein erster Auslass für die Hinterachse und der zweite Auslass für eine weitere Achse verwendet wird. Ein erster Anschluss des T-Stücks ist dann mit dem ersten Federspeicheranschluss verbunden, ein zweiter Anschluss des T-Stücks mit dem Absperrventil und ein dritter Anschluss des T-Stücks bildet einen dritten Federspeicheranschluss für Federspeicherbremsen der Hinterachse.

Es kann aber auch vorgesehen sein, dass das Feststellbremsmodul selbst zwei Anschlüsse aufweist, nämlich den ersten Federspeicheranschluss und einen separaten Hinterachsanschluss für die Federspeicherbremsen der Hinterachse. In diesem Fall können auch zwei verschiedene Federspeicherbremsdrücke, nämlich ein erster Federspeicherbremsdruck und ein zweiter Federspeicherbremsdruck ausgesteuert werden. Der erste Federspeicherbremsdruck und der zweite Federspeicherbremsdruck sind vorzugsweise identisch. Je nach Gestaltung des Feststellbremsmoduls kann auch vorgesehen sein, dass der erste Federspeicherbremsdruck und der zweite Federspeicherbremsdruck unterschiedlich sind, oder sogar unabhängig voneinander.

In einer bevorzugten Ausführungsform ist das Absperrventil elektromagnetisch schaltbar und das Absperrsignal ist ein von der elektronischen Steuereinheit bereitgestellte elektronisches Signal. In gewissen Ausführungsformen kann auch vorgesehen sein, dass das Absperrsignal ein pneumatisches Signal ist, bevorzugt ist dies aber ein elektronisches Signal. Die elektronische Steuereinheit der elektropneumatischen Feststellbremsanordnung kann mit dem Feststellbremsmodul integriert sein und insbesondere die elektronische Steuereinheit des Feststellbremsmoduls sein. Vorzugsweise ist die elektronische Steuereinheit über einen Fahrzeugbus oder eine alternative Kommunikationsschnittstelle mit einem Zentralmodul oder dergleichen gekoppelt, sodass die elektronische Steuereinheit auch dazu vorgesehen ist, Signale zu empfangen, die beispielsweise einen Fehler in der Hinterachsbetriebsbremsansteuerung darstellen. Basierend hierauf kann dann die elektronische Steuereinheit das Absperrsignal bereitstellen.

Vorzugsweise weist das Absperrventil eine erste Schaltstellung, in welcher der Federspeicherbremsdruck an die Federspeicherbremsen der weiteren Achse durchsteuerbar ist, und eine zweite Schaltstellung auf, in welcher die Federspeicherbremsen der weiteren Achse unabhängig vom Federspeicherbremsdruck belüftet bleiben. Der Federspeicherbremsdruck wird in diesem Fall nicht an die Federspeicherbremsen der wenigstens einen weiteren Achse weitergeleitet, und die Federspeicherbremsen der weiteren Achse bleiben unabhängig vom Federspeicherbremsdruck belüftet. Ein Zuspannen der Federspeicherbremsen der wenigstens einen weiteren Achse wird verhindert. In einer Variante ist hierbei vorzugsweise vorgesehen, dass das Absperrventil dazu ausgebildet ist, in der zweiten Schaltstellung einen Vorratsdruck an die Federspeicherbremsen der weiteren Achse auszusteuern. Hierdurch kann sichergestellt werden, dass die Federspeicherbremsen der weiteren Achse gelöst, also belüftet bleiben.

In diesem Fall ist das Absperrventil vorzugsweise als 3/2-Wege-Ventil ausgebildet. Es verfügt vorzugsweise über einen mit dem ersten Federspeicheranschluss verbundenen ersten 3/2-Wege-Ventilanschluss, einen den zweiten Federspeicheranschluss bildenden oder mit diesem verbundenen zweiten 3/2-Wege-Ventilanschluss und einen mit dem oder einem Druckluftvorrat verbundenen oder verbindbaren dritten 3/2-Wege-Ventilanschluss auf. In einer ersten Schaltstellung ist vorzugsweise der erste 3/2-Wege-Ventilanschluss mit dem zweiten 3/2-Wege-Ventilanschluss und in der zweiten Schaltstellung der zweite 3/2-Wege-Ventilanschluss mit dem dritten 3/2-Wege-Ventilanschluss verbunden. In der ersten Schaltstellung wird folglich der Federspeicherbremsdruck an dem zweiten Federspeicheranschluss ausgesteuert, während in der zweiten Schaltstellung der Vorratsdruck von dem oder einem Druckluftvorrat an dem zweiten Federspeicheranschluss ausgesteuert wird.

Es kann vorgesehen sein, dass das 3/2-Wege-Ventil mit dem Feststellbremsmodul integriert ist, insbesondere in ein gemeinsames Gehäuse. Ebenso kann es aber auch separat von diesem und insbesondere entfernt angeordnet sein. Je nach Auslegung des gesamten Bremssystems hat die eine oder die andere Variante Vorteile.

In einer weiteren Variante ist vorgesehen, dass dieses Absperrventil dazu vorgesehen ist, in der zweiten Schaltstellung einen Druck der Federspeicherbremsen der weiteren Achse einzusperren. In diesem Fall wird kein Vorratsdruck zusätzlich an den Federspeicherbremsen der wenigstens einen weiteren Achse ausgesteuert, sondern der bereits vorhandene und dort anliegende Druck der Federspeicherbremsen wird lediglich eingesperrt und so ein Entlüften der Federspeicherbremsen verhindert. Diese Variante ist konstruktiv einfacher, hat aber den Nachteil, dass ein Nachführen von Luft zum weiteren Belüften der Federspeicherbremsen der weiteren Achse nicht möglich ist.

In diesem Fall ist das Absperrventil vorzugsweise als 2/2-Wege-Ventil ausgebildet. Es weist vorzugsweise einen mit dem Absperrventilanschluss verbundenen ersten 2/2-Wege-Ventilanschluss und einen den zweiten Federspeicheranschluss bildenden zweiten 2/2-Wege-Ventilanschluss auf, wobei in der ersten Schaltstellung der erste 2/2-Wege-Ventilanschluss mit dem zweiten 2/2-Wege-Ventilanschluss verbunden ist, und in der zweiten Schaltstellung der erste 2/2-Wege-Ventilanschluss und der zweite 2/2-Wege-Ventil 2/2-Wege-Ventilanschluss getrennt sind.

Stromlos sind sowohl das 3/2-Wege-Ventil als auch das 2/2-Wege-Ventil vorzugsweise in ihren ersten Schaltstellungen, sodass stromlos jeweils der Federspeicherbremsdruck an dem zweiten Federspeicheranschluss aussteuerbar ist. Hierdurch kann die Sicherheit weiter erhöht werden.

Weiterhin ist bevorzugt, dass die elektronische Steuereinheit dazu ausgebildet ist, wenn ein Feststellbremssignal des elektronischen Parkbremsschalters zum Einlegen der Feststellbremsen empfangen wird, das Absperrsignal nicht auszugeben. In diesem Fall soll, unabhängig davon ob eine Hinterachsbetriebssteuerung fehlerhaft ist oder nicht, das Fahrzeug abgestellt und geparkt werden, sodass das Einlegen der Parkbremsen, das heißt das Entlüften der Federspeicherbremszylinder, sowohl der Hinterachse als auch der wenigstens einen weiteren Achse, bevorzugt ist. Aus diesem Grund ist bevorzugt, dass wenn der Fahrzeugführer den Parkbremsschalter betätigt, die Aussteuerung des Absperrsignals durch die elektronische Steuereinheit verhindert wird.

Weiterhin ist die elektronische Steuereinheit vorzugsweise dazu ausgebildet, wenn ein Feststellbremssignal des elektronischen Parkbremsschalters zum Lösen der Feststellbremsen empfangen wird, das Absperrsignal an dem Absperrventil bereitzustellen. Diese Variante ist dann besonders bevorzugt, wenn das Absperrventil dazu ausgebildet ist, in der zweiten Schaltstellung einen Vorratsdruck an die Federspeicherbremsen der weiteren Achse auszusteuern. Auf diese Weise kann beim Lösen der Feststellbremsen mittels des elektronischen Parkbremsschalters zusätzlich Vorratsdruck an dem Feststellbremsmodul vorbei nur über das Absperrventil direkt an den Federspeicherbremsen der wenigstens einen weiteren Achse ausgesteuert werden, um das Lösen der Federspeicherbremsen der weiteren Achse zu beschleunigen. Hierdurch kann der Lösevorgang insgesamt beschleunigt werden.

In einer Variante ist das Absperrventil an ein Gehäuse des elektropneumatischen Feststellbremsmoduls angeflanscht. Über die Flanschverbindung können direkt die entsprechenden Anschlüsse verbunden sein und eine bauoptimierte Gestaltung erreicht werden.

In einem zweiten Aspekt wird die eingangs genannte Aufgabe gelöst durch ein Verfahren zum Steuern eines elektronisch gesteuerten pneumatischen Bremssystems gemäß dem ersten Aspekt der Erfindung, mit den Schritten: Empfangen eines redundanten Feststellbremssignals an der elektronischen Steuereinheit, wobei das redundante Feststellbremssignal anzeigt oder anfordert, dass eine redundante Ansteuerung von Betriebsbremsen der weiteren Achse ausgeführt wird, und Bereitstellen des Absperrsignals an dem Absperrventil.

Das Verfahren umfasst weiterhin vorzugsweise die Schritte: Empfangen eines Feststellbremssignals von einem elektronischen Parkbremsschalter zum Lösen von Federspeicherbremsen; und Bereitstellen des Absperrsignals an dem Absperrventil zum Aussteuern des Vorratsdrucks an dem zweiten Federspeicheranschluss. Auf diese Weise kann ein Lösen von Federspeicherbremsen der weiteren Achse beschleunigt werden.

Die hierin beschriebene Anordnung, das Bremssystem und das Verfahren, eignen sich besonders bei höheren Automatisierungsgraden (Level 2-5) oder als alternatives Redundanzkonzept in einem 2e-Bremssystem (2e-BST).

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von dem mit der Erfindung angestrebten Schutzumfang, wie er in den beigefügten Ansprüchen definiert ist, abzuweichen.

Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1: eine schematische Darstellung einer elektronischen Feststellbremsanordnung gemäß einem ersten Ausführungsbeispiel;
- Fig. 2: eine schematische Darstellung eines elektronisch gesteuerten pneumatischen Bremssystems mit einer elektropneumatischen Feststellbremsanordnung gemäß dem ersten Ausführungsbeispiel; und
- Fig. 3: ein elektronisch gesteuertes pneumatisches Bremssystem mit einer elektropneumatischen Feststellbremsanordnung gemäß einem zweiten Ausführungsbeispiel.

Eine elektropneumatische Feststellbremsanordnung 1 weist einen Vorratsanschluss 2 zum Anschließen eines Druckluftvorrats 3, einen ersten Federspeicheranschluss 4 und einen zweiten Federspeicheranschluss 5 auf. Konkret sind der Vorratsanschluss 2 und der erste Federspeicheranschluss 4 an einem Feststellbremsmodul 100 ausgebildet, welches Teil der elektropneumatischen Feststellbremsanordnung 1 ist.

Das Feststellbremsmodul 100 kann in herkömmlicher Weise ausgebildet sein, insbesondere wie in DE 103 36 611 A1, DE 10 2017 002 715 A1, DE 10 2017 006 356 A1 oder in DE 10 2017 007 780 A1 beschrieben. Das Feststellbremsmodul 100 ist in bekannter Weise ausgebildet und weist eine elektronische Steuereinheit ECU sowie eine elektropneumatische Ventileinheit 8 auf. Die elektropneumatische Ventileinheit 8 weist wenigstens ein elektronisch schaltbares Magnetventil (nicht gezeigt) auf und empfängt von der elektronischen Steuereinheit ECU Schaltsignale, die die elektropneumatische Ventileinheit 8 dazu veranlassen, aus dem Vorratsdruck pV, der an dem Vorratsanschluss 2 bereitgestellt wird, entsprechend einen Federspeicherbremsdruck pF an dem ersten Federspeicheranschluss 4 bereitzustellen.

In der hier gezeigten Ausführungsformen, weist das Feststellbremsmodul 100 nur einen einzigen Federspeicheranschluss 4 auf, an den dann ein T-Stück 14 angeschlossen ist. Der erste T-Stückanschluss 14.1 ist mit dem ersten Federspeicheranschluss 4 verbunden, der zweite T-Stückanschluss 14.2 ist mit dem Absperrventil 10 verbunden und der dritte T-Stückanschluss 14.3 bildet einen dritten Federspeicheranschluss 15, an den dann die Federspeicherbremsen 6 der Hinterachse HA angeschlossen werden können.

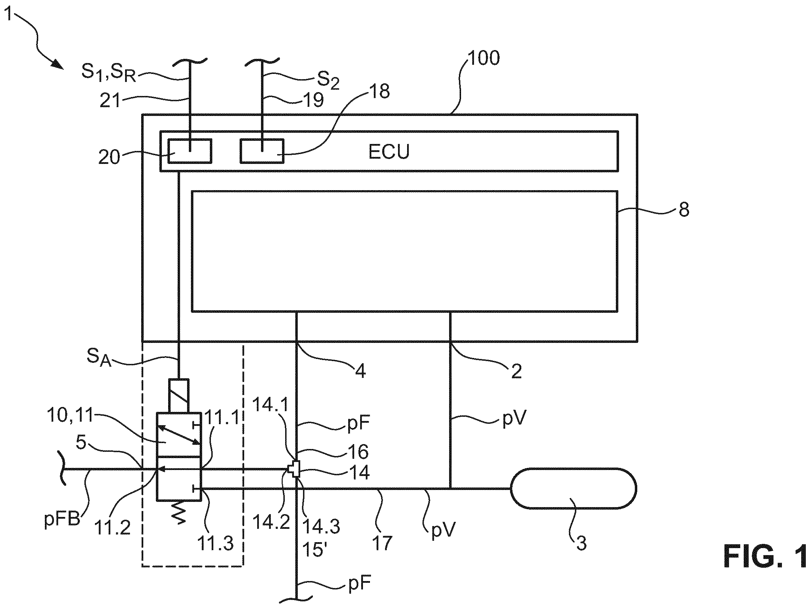

Gemäß der Erfindung weist die elektropneumatische Feststellbremsanordnung 1 ein Absperrventil 10 auf, das mit dem ersten Federspeicheranschluss 4 verbunden ist. Konkret ist das Absperrventil 10 in der in Figur 1 gezeigten Ausführungsform über das T-Stück 14 mit dem ersten Federspeicheranschluss 4 verbunden. Das Absperrventil 10 empfängt den Federspeicherbremsdruck pF und stellt einen geregelten Federspeicherbremsdruck pFB zur Schlupfregelung der Räder einer Achse an einem zweiten Federspeicheranschluss 5 bereit, der dazu vorgesehen ist, mit Federspeicherbremsen 7 einer weiteren Achse VA, ZA verbunden zu werden. insbesondere kann das Absperrventil 10 direkt den zweiten Federspeicheranschluss 5 bilden.

In der in Fig.1 gezeigten Ausführungsform ist das Absperrventil 10 als 3/2-Wege-Ventil 11 ausgebildet. Es weist einen ersten 3/2-Wege-Ventilanschluss 11.1, einen zweiten 3/2-Wege-Ventilanschluss 11.2 und einen dritten 3/2-Wege-Ventilanschluss 11.3 auf. In einer ersten in Fig. 1 gezeigten Schaltstellung ist der erste 3/2-Wege-Ventilanschluss 11.1 mit dem zweiten 3/2-Wege-Ventilanschluss 11.2 verbunden. In einer zweiten in Fig. 1 nicht gezeigten Schaltstellung ist der dritte 3/2-Wege-Ventilanschluss 11.3 mit dem zweiten 3/2-Wege-Ventilanschluss 11.2 verbunden. Das 3/2-Wege-Ventil 11 ist stromlos in die erste Schaltstellung vorgespannt. Der erste 3/2-Wege-Ventilanschluss 11.1 ist über eine erste pneumatische Leitung 16 mit dem ersten Federspeicheranschluss 4 verbunden, sodass an diesem der Federspeicherbremsdruck pF anliegt. Der zweite 3/2-Wege-Ventilanschluss 11.2 ist mit dem zweiten Federspeicheranschluss 5 verbunden, oder bildet diesen. Der dritte 3/2-Wege-Ventilanschluss 11.3 ist über eine zweite pneumatische Leitung 17 mit dem Druckluftvorrat 3 verbunden, sodass an dem dritten 3/2-Wege-Ventilanschluss 11.3 der Vorratsdruck pV anliegt. Das heißt, in der ersten Schaltstellung wird der Federspeicherbremsdruck pF durch das Absperrventil 10 durchgesteuert, und in der zweiten Schaltstellung liegt der Vorratsdruck pV an dem zweiten Federspeicheranschluss 5 an.

Die elektronische Steuereinheit ECU weist ferner einen ersten elektrischen Anschluss 18 und einen zweiten elektrischen Anschluss 20 auf. Der erste elektrische Anschluss 18 ist mit einer ersten elektrischen Leitung 19 verbunden, die beispielsweise als BUS ausgebildet sein kann. Der zweite elektrische Anschluss 20 ist mit einer zweiten elektrischen Leitung 21 verbunden, die ebenfalls als BUS, beispielsweise Fahrzeug-BUS ausgebildet sein kann. Über die erste elektrische Leitung 19 empfängt die elektronische Steuereinheit ECU ein erstes Feststellbremssignal S1, welches von einer Zentraleinheit oder einer Einheit für autonomes Fahren bereitgestellt wird. Über die zweite elektrische Leitung 21 empfängt die elektronische Steuereinheit ECU ein redundantes Feststellbremssignal SR, das anzeigt, dass eine Hinterachsbetriebsbremsansteuerung nicht oder nicht ordnungsgemäß funktioniert und eine redundante Ansteuerung der Hinterachse HA durchgeführt wird. Ferner empfängt die elektronische Steuereinheit ECU über die zweite elektrische Leitung 21 ein zweites Feststellbremssignal S2, das von einem elektronischen Parkbremsschalter HCU manuell ausgelöst wird.

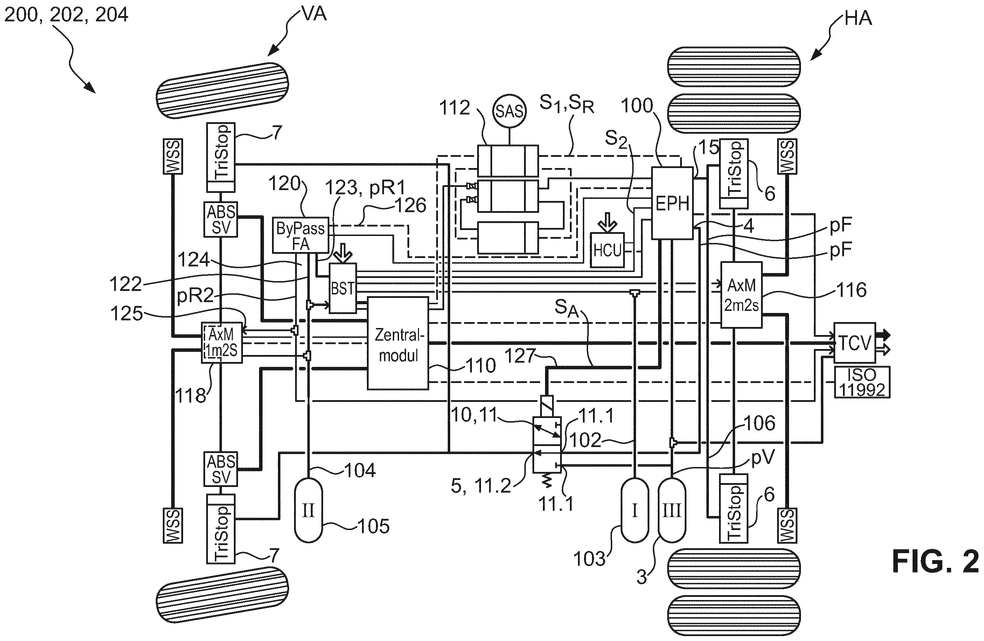

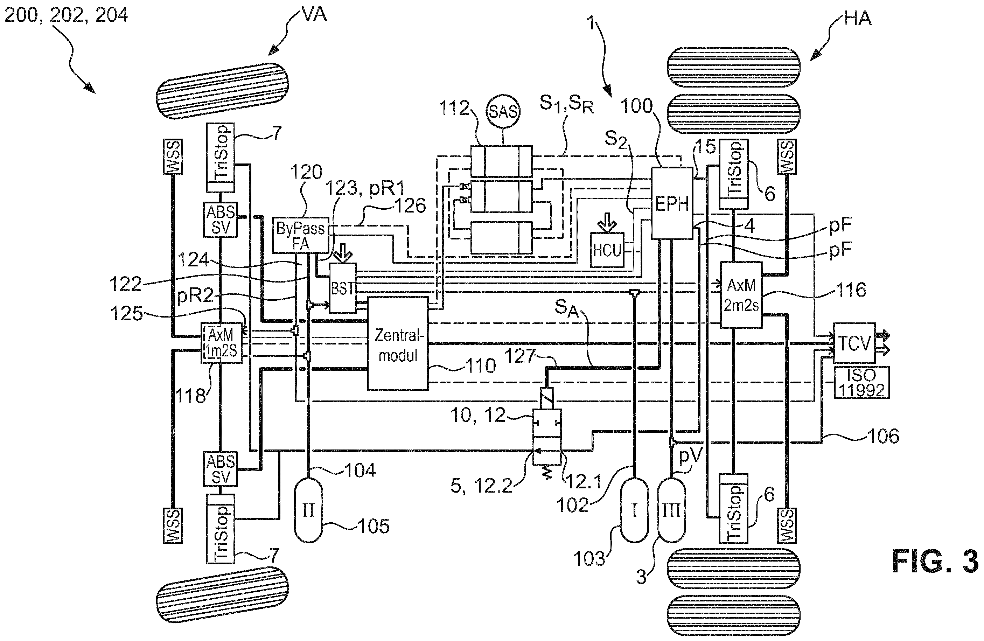

Während die ersten und zweiten Feststellbremssignale S1, S2 für den normalen Betrieb des Feststellbremsmoduls 100 verwendet werden, um den Federspeicherbremsdruck pF auszusteuern, bzw., zu entlüften, um so die Feststellbremsen 6, 7 (Figuren 2, 3) einzulegen, wird, basierend auf dem Empfang des redundanten Feststellbremssignals SR, ein Absperrsignal SA von der elektronischen Steuereinheit ECU ausgesteuert. Dieses Absperrsignal SA wird an dem Absperrventil 10 bereitgestellt, welches dann von der in Fig. 1 gezeigten ersten Schaltstellung in die in Fig. 1 nicht gezeigte zweite Schaltstellung schaltet, um so den Vorratsdruck pV an dem zweiten Federspeicheranschluss 5 auszusteuern.

Das Absperrventil 10 ist in Fig. 1 mit einer gestrichelten Linie umrandet dargestellt. Hierdurch soll angedeutet werden, dass das Absperrventil 10 auch in das Feststellbremsmodul 100 integriert sein kann. In dem Fall wäre der zweite Federspeicheranschluss 5 eine Schnittstelle des Feststellbremsmoduls 100. In einer Variante kann das Absperrventil 10 auch an ein Gehäuse des Feststellbremsmoduls 100 angeflanscht sein, oder entfernt von diesem vorgesehen sein.

Die Figuren 2 und 3 zeigen nun zwei verschiedene Ausführungsformen eines elektronisch gesteuerten pneumatischen Bremssystems 200 eines Fahrzeugs 202, nämlich eines Nutzfahrzeugs 204. Das Nutzfahrzeug 204 weist eine Hinterachse HA und eine vordere Achse VA auf, die in diesem Ausführungsbeispiel eine weitere Achse bildet. Ebenso kann die weitere Achse als Zusatzachse ZA gebildet sein, die in diesem Ausführungsbeispiel aber nicht gezeigt ist.

Das Bremssystem 200 weist neben dem Feststellbremsmodul 100 zunächst erste Federspeicherbremsen 6 für die Hinterachse HA und zweite Federspeicherbremsen 7 für die Vorderachse VA auf. Sowohl die ersten Federspeicherbremsen 6 als auch die zweiten Federspeicherbremsen 7 sind in sogenannten dreifach wirkenden Bremszylindern vorgesehen, die auch als Betriebsbremsen wirken können. Der Betriebsbremsenteil der ersten Federspeicherbremsen 6 wird durch einen ersten Bremskreis 102 gespeist, der mit einem Druckluftvorrat 103 verbunden ist. Die Betriebsbremsenteile der zweiten Federspeicherbremsen 7 in der Vorderachse VA werden durch einen zweiten Bremskreis 104 gespeist, der mit einem zweiten Druckluftvorrat 105 verbunden ist. Der Parkbremskreis 106, der auch mit dem Feststellbremsmodul 100 verbunden ist, wird durch den Druckluftvorrat 3, hier also der dritte Druckluftvorrat 3, gespeist.

Zum Steuern des Bremssystems 200 ist ein Zentralmodul 110 vorgesehen, welches mit einem Fahrzeug-BUS 112 verbunden ist. Über den Fahrzeug-BUS 112 werden Informationen und Daten ausgetauscht, insbesondere solche, die von einer Einheit für autonomes Fahren 114 stammen, und insbesondere Signale für die Betriebsbremsen auslösen. Auch das Feststellbremsmodul 100 ist mit dem Fahrzeug-BUS 112 verbunden und empfängt über diesen beispielsweise das redundante Feststellbremssignal SR.

Zur Aussteuerung des Betriebsbremsdrucks an der Hinterachse HA ist ein Hinterachs-Modulator 116 vorgesehen, und zur Aussteuerung des Betriebsbremsdrucks an der Vorderachse VA ist ein Vorderachs-Modulator 118 vorgesehen. Diese sind jeweils mit dem Zentralmodul 110 verbunden und werden mit pneumatischem Druck aus dem ersten Druckluftvorrat 103, bzw. zweiten Druckluftvorrat 105 versorgt. In bekannter Weise steuern diese, basierend auf dem Empfang von entsprechenden Signalen vom Zentralmodul 110, die Aussteuerung von entsprechenden Radbremsdrücken an die Betriebsbremsen der entsprechenden Vorder- bzw. Hinterachse VA, HA.

Das Aussteuern von Betriebsbremsdrücken kann über ein Bremspedal BST erfolgen, das in diesem Ausführungsbeispiel elektrisch wirkt und mit dem Zentralmodul 110 verbunden ist. Ferner weist das Bremssystem 200 einen elektronischen Parkbremsschalter HCU auf, der über elektrische Leitungen mit dem Feststellbremsmodul 100 verbunden ist und an diesem das zweite Feststellbremssignal S2 bereitstellt. Für eine Redundanzaussteuerung des Vorderachsbremsdrucks, weist das Bremssystem 200 in diesem Ausführungsbeispiel ein elektropneumatisches Redundanzmodul 120 auf. Dieses Redundanzmodul 120 empfängt Vorratsdruck pV von dem zweiten Druckluftvorrat 105 über eine dritte pneumatische Leitung 122. Über eine pneumatische Redundanzsteuerleitung 123 ist das Redundanzmodul 120 mit dem Bremspedal BST verbunden und empfängt einen redundanten Bremsdruck PR von diesem. Basierend hierauf, stellt das Redundanzmodul 120 einen entsprechenden redundanten Bremssteuerdruck pR2 über eine vierte pneumatische Leitung 124 an dem Vorderachs-Modulator 118 bereit, nämlich an einem Redundanzdruckanschluss 125 von diesem. Basierend auf diesem empfangenen redundanten Steuerdruck pR2 kann der Vorderachs-Modulator 118 einen Vorderachsbremsdruck an Betriebsbremsen der Vorderachse VA aussteuern. Gleichzeitig stellt das Redundanzmodul 120 über dritte elektrische Leitungen 126 entsprechende Signale an dem Feststellbremsmodul 100 bereit, welches basierend hierauf den Federspeicherbremsdruck pF absenkt, um mittels der Feststellbremsen 6 der Hinterachse HA diese redundant einzubremsen. Da aber auch die Vorderachse VA über Federspeicherbremsen 7 verfügt, würden diese mit eingebremst werden, wenn der Federspeicherbremsdruck pF absinkt.

Zu diesem Zweck ist, wie oben bereits beschrieben, das Absperrventil 10 vorgesehen, welches zwischen das Feststellbremsmodul 100 und die Federspeicherbremsen 7 der Vorderachse VA geschaltet ist. Im Redundanzfall empfängt das Absperrventil 10 von dem Feststellbremsmodul 100 über eine elektrische Absperrventilleitung 126 das Absperrsignal SA, sodass das Absperrventil 10 schaltet. In dem in Fig. 2 gezeigten Ausführungsbeispiel ist das Absperrventil 10 wiederum als 3/2-Wege-Ventil 11 ausgebildet, sodass bei Empfang des Absperrsignals SA der Vorratsdruck pV des dritten Druckluftvorrats 3 an den Federspeicherbremsen 7 der Vorderachse VA bereitgestellt wird.

Gleichzeitig kann aber das Absperrsignal SA auch dann bereitgestellt werden, wenn das Nutzfahrzeug 204 aus einem abgestellten und geparkten Zustand, in dem die Federspeicherbremsen 6, 7 eingelegt sind, gelöst werden soll. In diesem Fall müssen die Federspeicherbremsen 6, 7 belüftet werden. Wird in dem in Fig. 2 gezeigten Ausführungsbeispiel dann das Absperrsignal SA bereitgestellt, schaltet das Absperrventil 10 in die zweite in Fig. 2 nicht gezeigte Schaltstellung und die Federspeicherbremsen 7 der Vorderachse VA werden direkt von dem dritten Druckluftvorrat 3 aus belüftet. Hierdurch können die Federspeicherbremsen 7 der Vorderachse VA rascher gelöst werden.

Im Unterschied zum ersten Ausführungsbeispiel (Fig. 1) ist hier ein separater dritter Federspeicheranschluss 15 für die Hinterachse HA vorgesehen. Das Feststellbremsmodul 100 weist also zwei Federspeicheranschlüsse auf, nämlich einerseits den ersten Federspeicheranschluss 4, an den das Absperrventil 10 angeschlossen ist, und den dritten Federspeicheranschluss 15, an die die Federspeicherbremsen 6 der Hinterachse HA direkt angeschlossen sind. Das T-Stück 14 kann so entfallen.

Das in Fig.3 gezeigte Ausführungsbeispiel basiert grundsätzlich auf dem in Fig. 2 gezeigten Bremssystem, wobei gleiche und ähnliche Elemente mit gleichen Bezugszeichen versehen sind. Im Folgenden werden insbesondere die Unterschiede zum ersten Ausführungsbeispiel (Fig. 1, 2) beschrieben.

Im Unterschied zum ersten Ausführungsbeispiel ist das Absperrventil 10 als 2/2-Wege-Ventil 12 ausgebildet. Es weist einen ersten 2/2-Wege-Ventilanschluss 12.1 und einen zweiten 2/2-Wege-Ventilanschluss 12.2 auf. Der zweite 2/2-Wege-Ventilanschluss 12.2 bildet in diesem Fall den zweiten Federspeicheranschluss 5. Ebenso wie in dem ersten Ausführungsbeispiel empfängt auch das 2/2-Wege-Ventil 12 das Absperrsignal SA von dem Feststellbremsmodul 100, um von der ersten in Fig. 3 gezeigten Schaltstellung in die zweite, in Fig. 3 nicht gezeigte Schaltstellung, zu schalten. In der zweiten, in Fig. 3 nicht gezeigten Schaltstellung, sind der erste und zweite 2/2-Wege-Ventilanschluss 12.1, 12.2 getrennt, sodass der in den Federspeicherbremsen 7 der Vorderachse VA vorhandene Druck eingesperrt wird, und die Federspeicherbremsen 7 der Vorderachse VA gelöst bleiben.

### Bezugszeichenliste (Teil der Beschreibung)

- 1: Elektropneumatische Feststellbremsanordnung
- 2: Vorratsanschluss
- 3: Druckluftvorrat
- 4: erster Federspeicheranschluss
- 5: zweiter Federspeicheranschluss
- 6: erste Federspeicherbremsen
- 7: zweite Federspeicherbremsen
- 8: elektropneumatische Ventileinheit
- 10: Absperrventil
- 11: 3/2-Wege-Ventil
- 11.1: erster 3/2-Wege-Ventilanschluss
- 11.2: zweiter 3/2-Wege-Ventilanschluss
- 11.3: dritter 3/2-Wege-Ventilanschluss
- 14: T-Stück
- 14.1: erster T-Stückanschluss
- 14.2: zweiter T-Stückanschluss
- 14.3: dritter T-Stückanschluss
- 15: dritter Federspeicheranschluss
- 16: erste pneumatische Leitung
- 17: zweite pneumatische Leitung
- 18: erster elektrischer Anschluss
- 19: erste elektrische Leitung
- 20: zweiter elektrischer Anschluss
- 21: zweite elektrische Leitung
- 100: Feststellbremsmodul
- 102: erster Bremskreis
- 103: erster Druckluftvorrat
- 104: zweiter Bremskreis
- 105: zweiter Druckluftvorrat
- 106: Parkbremskreis
- 110: Zentralmodul
- 112: Fahrzeug-BUS
- 114: Einheit für autonomes Fahren
- 116: Hinterachsmodulator
- 118: Vorderachsmodulator
- 120: elektropneumatisches Redundanzmodul
- 122: dritte pneumatische Leitung
- 123: pneumatische Redundanzleitung
- 124: Vierte pneumatische Leitung
- 125: Redundanzanschluss von 118
- 126: dritte elektrische Leitungen
- 127: elektrische Absperrventilleitung
- 200: elektronisch gesteuertes pneumatisches Bremssystem
- 202: Fahrzeug
- 204: Nutzfahrzeug
- ECU: elektronische Steuereinheit
- pF: Federspeicherbremsdruck
- pFB: blockiergesicherter Federspeicherbremsdruck
- pV: Vorratsdruck
- VA: Vorderachse
- HA: Hinterachse
- BST: Bremspedal
- HCU: elektrischer Parkbremsschalter

## Patentansprüche

1. Elektronisch gesteuertes pneumatisches Bremssystem (200) für ein Fahrzeug, insbesondere Nutzfahrzeug, mit
einem Zentralmodul (110) zum Steuern des Bremssystems (200), umfassend eine Hinterachsbetriebsbremsansteuerung,
wenigstens einem ersten Bremskreis (102, 104) und einem Parkbremskreis (106),
einer elektropneumatischen Feststellbremsanordnung (1) mit ersten Federspeicherbremsen (6) an einer Hinterachse (HA) und zweiten Federspeicherbremsen (7) einer weiteren Achse (VA, ZA) mit
einem Absperrventil (10), und
einem Feststellbremsmodul (100),
wobei das Feststellbremsmodul (100)
einen Vorratsanschluss (2) zum Anschließen an einen Druckluftvorrat (3),
einen ersten Federspeicheranschluss (4) zum Anschließen des Absperrventils (10),
eine elektropneumatische Ventileinheit (8) mit wenigstens einem elektropneumatischen Ventil zum Aussteuern eines Federspeicherbremsdrucks (pF) an dem ersten Federspeicheranschluss (4), und
eine elektronische Steuereinheit (ECU) zum Empfangen von Feststellbremssignalen (S1, S2, SR) von einem elektronischen Feststellbremsschalter (HCU) und/oder einer übergeordneten Steuereinheit (110) aufweist,
wobei das Absperrventil (10) einen zweiten Federspeicheranschluss (5) zum Anschließen von Federspeicherbremsen (7) der weiteren Achse (VA, ZA) aufweist und in Abhängigkeit von einem von dem Feststellbremsmodul (100) bereitgestellten Absperrsignal (SA) den zweiten Federspeicheranschluss (5) absperrt, **dadurch gekennzeichnet, dass**
das elektropneumatische Feststellbremsmodul (100) dazu ausgebildet ist, das Absperrsignal (SA) bereitzustellen, wenn in einem Fehlerfall der Hinterachsbetriebsbremsansteuerung eine Ansteuerung der weiteren Achse (VA, ZA) durch einen Normalbetrieb eines weiteren Achs-Modulators (116, 118) oder eines pneumatischen Redundanzmodus des weiteren Achs-Modulators oder ein elektropneumatisches Redundanzmodul (120) ausgeführt wird,
wobei die elektronische Steuereinheit (ECU) dazu ausgebildet ist ein redundantes Feststellbremssignal (SR) zu empfangen, welches anzeigt oder anfordert, dass eine redundante Ansteuerung von Betriebsbremsen der weiteren Achse ausgeführt wird, und in diesem Fall die elektronische Steuereinheit (ECU) das Absperrsignal (SA) an dem Absperrventil (10) bereitstellt.

2. Elektronisch gesteuertes pneumatisches Bremssystem (200) nach Anspruch 1, wobei an den ersten Federspeicheranschluss (4) Federspeicherbremsen (6) einer Hinterachse (HA) anschließbar sind.

3. Elektronisch gesteuertes pneumatisches Bremssystem (200) nach Anspruch 1, wobei das Feststellbremsmodul (100) einen separaten Hinterachsanschluss (15) für Federspeicherbremsen (6) einer Hinterachse (HA) aufweist.

4. Elektronisch gesteuertes pneumatisches Bremssystem (200) nach einem der vorstehenden Ansprüche, wobei das Absperrventil (10) elektromagnetisch schaltbar ist und das Absperrsignal (SA) ein von der elektronischen Steuereinheit (ECU) bereitgestelltes elektronisches Signal ist.

5. Elektronisch gesteuertes pneumatisches Bremssystem (200) nach einem der vorstehenden Ansprüche, wobei das Absperrventil (10) eine erste Schaltstellung, in welcher der Federspeicherbremsdruck (pF) an die Federspeicherbremsen (7) der weiteren Achse (VA) durchsteuerbar ist, und eine zweite Schaltstellung aufweist, in welcher die Federspeicherbremsen (7) der weiteren Achse (VA, ZA) unabhängig vom Federspeicherbremsdruck (pF) belüftet bleiben.

6. Elektronisch gesteuertes pneumatisches Bremssystem (200) nach Anspruch 5, wobei das Absperrventil (10) dazu vorgesehen ist, in der zweiten Schaltstellung einen Vorratsdruck (pV) an die Federspeicherbremsen (7) der weiteren Achse (VA, ZA) auszusteuern.

7. Elektronisch gesteuertes pneumatisches Bremssystem (200) nach Anspruch 6, wobei das Absperrventil (10) als 3/2-Wege-Ventil (11) ausgebildet ist.

8. Elektronisch gesteuertes pneumatisches Bremssystem (200) nach Anspruch 7, wobei das Absperrventil (10) einen mit dem ersten Federspeicheranschluss (4) verbundenen ersten 3/2-Wege-Ventilanschluss (11.1), einen den zweiten Federspeicheranschluss (5) bildenden oder mit diesem verbundenen zweiten 3/2-Wege-Ventilanschluss (11.2) und einen mit dem oder einem Druckluftvorrat (3) verbundenen oder verbindbaren dritten 3/2-Wege-Ventilanschluss (11.3) aufweist, und wobei in der ersten Schaltstellung der erste 3/2-Wege-Ventilanschluss (11.1) mit dem zweiten 3/2-Wege-Ventilanschluss (11.2), und in der zweiten Schaltstellung, der zweite 3/2-Wege-Ventilanschluss (11.2) mit dem dritten 3/2-Wege-Ventilanschluss (11.3) verbunden ist.

9. Elektronisch gesteuertes pneumatisches Bremssystem (200) nach Anspruch 5, wobei das Absperrventil (10) dazu vorgesehen ist, in der zweiten Schaltstellung einen Druck der Federspeicherbremsen (7) der weiteren Achse (VA, ZA) einzusperren.

10. Elektronisch gesteuertes pneumatisches Bremssystem (200) nach Anspruch 9, wobei das Absperrventil (10) als 2/2-Wege-Ventil (12) ausgebildet ist.

11. Elektronisch gesteuertes pneumatisches Bremssystem (200) nach Anspruch 10, wobei das Absperrventil (10) einen mit dem ersten Federspeicheranschluss (4) verbundenen ersten 2/2-Wege-Ventilanschluss (12.1), und einen den zweiten Federspeicheranschluss (5) bildenden oder mit diesem verbundenen zweiten 2/2-Wege-Ventilanschluss (12.2) aufweist, und wobei in der ersten Schaltstellung der erste 2/2-Wege-Ventilanschluss (12.1) mit dem zweiten 2/2-Wege-Ventilanschluss (12.2) verbunden ist, und in der zweiten Schaltstellung, der erste 2/2-Wege-Ventilanschluss (12.1) und der zweite 2/2-Wege-Ventilanschluss (12.2) getrennt sind.

12. Elektronisch gesteuertes pneumatisches Bremssystem (200) nach einem der vorstehenden Ansprüche, wobei die elektronische Steuereinheit (ECU) dazu ausgebildet ist, wenn ein Feststellbremssignal (S1) des elektronischen Parkbremsschalters (HCU) zum Einlegen der Feststellbremsen (6, 7) empfangen wird, das Absperrsignal (SA) nicht auszugeben.

13. Elektronisch gesteuertes pneumatisches Bremssystem (200) nach Anspruch 6, wobei die elektronische Steuereinheit (ECU) dazu ausgebildet ist, wenn ein Feststellbremssignal (S2) des elektronischen Parkbremsschalters (HCU) zum Lösen der Feststellbremsen (6, 7) empfangen wird, das Absperrsignal (SA) an dem Absperrventil (10) bereitzustellen.

14. Elektronisch gesteuertes pneumatisches Bremssystem (200) nach einem der vorstehenden Ansprüche, wobei das Absperrventil (10) in das elektropneumatische Feststellbremsmodul (100) integriert ist.

15. Elektronisch gesteuertes pneumatisches Bremssystem (200) nach einem der vorstehenden Ansprüche 1 bis 13, wobei das Absperrventil (10) an ein Gehäuse des elektropneumatischen Feststellbremsmoduls (100) angeflanscht ist.

16. Elektronisch gesteuertes pneumatisches Bremssystem (200) nach einem der vorstehenden Ansprüche 1 bis 13, wobei das Absperrventil (10) von dem elektropneumatischen Feststellbremsmodul (100) separat und entfernt verbaut ist.

17. Verfahren zum Steuern eines elektronisch gesteuerten pneumatischen Bremssystems (200) für ein Fahrzeug, insbesondere Nutzfahrzeug, mit
einem Zentralmodul (110) zum Steuern des Bremssystems (200), umfassend eine Hinterachsbetriebsbremsansteuerung,
wenigstens einem ersten Bremskreis (102, 104) und einem Parkbremskreis (106),
einer elektropneumatischen Feststellbremsanordnung (1) mit ersten Federspeicherbremsen (6) an einer Hinterachse (HA) und zweiten Federspeicherbremsen (7) einer weiteren Achse (VA, ZA) mit
einem Absperrventil (10), und
einem Feststellbremsmodul (100),
wobei das Feststellbremsmodul (100)
einen Vorratsanschluss (2) zum Anschließen an einen Druckluftvorrat (3),
einen ersten Federspeicheranschluss (4) zum Anschließen des Absperrventils (10),
eine elektropneumatische Ventileinheit (8) mit wenigstens einem elektropneumatischen Ventil zum Aussteuern eines Federspeicherbremsdrucks (pF) an dem ersten Federspeicheranschluss (4), und
eine elektronische Steuereinheit (ECU) zum Empfangen von Feststellbremssignalen (S1, S2, SR) von einem elektronischen Feststellbremsschalter (HCU) und/oder einer übergeordneten Steuereinheit (110) aufweist,
wobei das Absperrventil (10) einen zweiten Federspeicheranschluss (5) zum Anschließen von Federspeicherbremsen (7) der weiteren Achse (VA, ZA) aufweist und in Abhängigkeit von einem von dem Feststellbremsmodul (100) bereitgestellten Absperrsignal (SA) den zweiten Federspeicheranschluss (5) absperrt,
wobei das elektropneumatische Feststellbremsmodul (100) dazu ausgebildet ist, das Absperrsignal (SA) bereitzustellen, wenn in einem Fehlerfall der Hinterachsbetriebsbremsansteuerung eine Ansteuerung der weiteren Achse (VA, ZA) durch einen Normalbetrieb eines weiteren Achs-Modulators (116, 118) oder eines pneumatischen Redundanzmodus des weiteren Achs-Modulators oder ein elektropneumatisches Redundanzmodul (120) ausgeführt wird, mit den Schritten:
- Empfangen eines redundanten Feststellbremssignals (SR) an der elektronischen Steuereinheit (ECU), wobei das redundante Feststellbremssignal (SR) anzeigt oder anfordert, dass eine redundante Ansteuerung von Betriebsbremsen der weiteren Achse ausgeführt wird, und
- Bereitstellen des Absperrsignals (SA) an dem Absperrventil (10).

18. Verfahren nach Anspruch 17, umfassend die Schritte:
- Empfangen eines Feststellbremssignals (S2) von einem elektronischen Parkbremsschalter (HCU) zum Lösen von Federspeicherbremsen (6, 7); und
- Bereitstellen des Absperrsignals (SA) an dem Absperrventil (10) zum Aussteuern des Vorratsdrucks (pV) an dem zweiten Federspeicheranschluss (5).

## Claims

1. Electronically controlled pneumatic brake system (200) for a vehicle, in particular a commercial vehicle, comprising
a central module (110) for controlling the brake system (200), comprising a rear axle service brake control,
at least one first brake circuit (102, 104) and one parking brake circuit (106),
an electropneumatic parking brake assembly (1) having first spring-loaded brakes (6) on a rear axle (HA) and second spring-loaded brakes (7) on a further axle (VA, ZA) comprising
a shut-off valve (10), and
a parking brake module (100),
the parking brake module (100) comprising
a supply connection (2) for connecting to a compressed air supply (3),
a first spring-loaded connection (4) for connecting the shut-off valve (10),
an electropneumatic valve unit (8) having at least one electropneumatic valve for modulating a spring-loaded brake pressure (pF) at the first spring-loaded connection (4), and
an electronic control unit (ECU) for receiving parking brake signals (S1, S2, SR) from an electronic parking brake switch (HCU) and/or a master control unit (110),
the shut-off valve (10) having a second spring-loaded connection (5) for connecting spring-loaded brakes (7) of the further axle (VA, ZA) and shutting off the second spring-loaded connection (5) in response to a shut-off signal (SA) provided by the parking brake module (100), **characterized in that**
the electropneumatic parking brake module (100) is designed to provide the shut-off signal (SA) when, in the event of a fault in the rear axle service brake control system, the further axle (VA, ZA) is controlled by normal operation of a further axle modulator (116, 118) or a pneumatic redundancy mode of the further axle modulator or an electropneumatic redundancy module (120), the electronic control unit (ECU) being designed to receive a redundant parking brake signal (SR) which indicates or requests that redundant control of service brakes of the further axle is carried out, and in this case the electronic control unit (ECU) provides the shut-off signal (SA) to the shut-off valve (10).

2. Electronically controlled pneumatic brake system (200) according to claim 1, wherein spring-loaded brakes (6) of a rear axle (HA) can be connected to the first spring-loaded connection (4).

3. Electronically controlled pneumatic brake system (200) according to claim 1, wherein the parking brake module (100) has a separate rear axle connection (15) for spring-loaded brakes (6) of a rear axle (HA).

4. Electronically controlled pneumatic brake system (200) according to any of the preceding claims, wherein the shut-off valve (10) is electromagnetically switchable and the shut-off signal (SA) is an electronic signal provided by the electronic control unit (ECU).

5. Electronically controlled pneumatic brake system (200) according to any of the preceding claims, wherein the shut-off valve (10) has a first switching position in which the spring-loaded brake pressure (pF) can be passed through to the spring-loaded brakes (7) of the further axle (VA), and a second switching position in which the spring-loaded brakes (7) of the further axle (VA, ZA) remain ventilated regardless of the spring-loaded brake pressure (pF).

6. Electronically controlled pneumatic brake system (200) according to claim 5, wherein the shut-off valve (10) is provided to modulate a supply pressure (pV) to the spring-loaded brakes (7) of the further axle (VA, ZA) in the second switching position.

7. Electronically controlled pneumatic brake system (200) according to claim 6, wherein the shut-off valve (10) is designed as a 3/2-way valve (11).

8. Electronically controlled pneumatic brake system (200) according to claim 7, wherein the shut-off valve (10) has a first 3/2-way valve connection (11.1) connected to the first spring-loaded connection (4), a second 3/2-way valve connection (11.2) forming the second spring-loaded connection (5) or connected thereto, and a third 3/2-way valve connection (11.3) connected or connectable to the or a compressed air supply (3), and wherein, in the first switching position, the first 3/2-way valve connection (11.1) is connected to the second 3/2-way valve connection (11.2), and in the second switching position, the second 3/2-way valve connection (11.2) is connected to the third 3/2-way valve connection (11.3).

9. Electronically controlled pneumatic brake system (200) according to claim 5, wherein the shut-off valve (10) is provided, in the second switching position, to confine a pressure of the spring-loaded brakes (7) of the further axle (VA, ZA).

10. Electronically controlled pneumatic brake system (200) according to claim 9, wherein the shut-off valve (10) is designed as a 2/2-way valve (12).

11. Electronically controlled pneumatic brake system (200) according to claim 10, wherein the shut-off valve (10) has a first 2/2-way valve connection (12.1) connected to the first spring-loaded connection (4), and a second 2/2-way valve connection (12.2) forming the second spring-loaded connection (5) or connected thereto, and wherein in the first switching position the first 2/2-way valve connection (12.1) is connected to the second 2/2-way valve connection (12.2), and in the second switching position the first 2/2-way valve connection (12.1) and the second 2/2-way valve connection (12.2) are separated.

12. Electronically controlled pneumatic brake system (200) according to any of the preceding claims, wherein the electronic control unit (ECU) is designed not to output the blocking signal (SA) when a parking brake signal (S1) of the electronic parking brake switch (HCU) for engaging the parking brakes (6,7) is received.

13. Electronically controlled pneumatic brake system (200) according to claim 6, wherein the electronic control unit (ECU) is designed to provide the shut-off signal (SA) to the shut-off valve (10) when a parking brake signal (S2) of the electronic parking brake switch (HCU) for releasing the parking brakes (6,7) is received.

14. Electronically controlled pneumatic brake system (200) according to any of the preceding claims, wherein the shut-off valve (10) is integrated into the electropneumatic parking brake module (100).

15. Electronically controlled pneumatic brake system (200) according to any of the preceding claims 1 to 13, wherein the shut-off valve (10) is flange-mounted onto a housing of the electropneumatic parking brake module (100).

16. Electronically controlled pneumatic brake system (200) according to any of the preceding claims 1 to 13, wherein the shut-off valve (10) is installed separately and at a distance from the electropneumatic parking brake module (100).

17. Method for controlling an electronically controlled pneumatic brake system (200) for a vehicle, in particular a commercial vehicle, comprising
a central module (110) for controlling the brake system (200), comprising a rear axle service brake control,
at least one first brake circuit (102, 104) and one parking brake circuit (106),
an electropneumatic parking brake assembly (1) having first spring-loaded brakes (6) on a rear axle (HA) and second spring-loaded brakes (7) on a further axle (VA, ZA) comprising
a shut-off valve (10), and
a parking brake module (100),
wherein the parking brake module (100) comprises
a supply connection (2) for connecting to a compressed air supply (3),
a first spring-loaded connection (4) for connecting the shut-off valve (10),
an electropneumatic valve unit (8) having at least one electropneumatic valve for modulating a spring-loaded brake pressure (pF) at the first spring-loaded connection (4), and
an electronic control unit (ECU) for receiving parking brake signals (S1, S2, SR) from an electronic parking brake switch (HCU) and/or a master control unit (110),
wherein the shut-off valve (10) has a second spring-loaded connection (5) for connecting spring-loaded brakes (7) of the further axle (VA, ZA) and shuts off the second spring-loaded connection (5) in response to a shut-off signal (SA) provided by the parking brake module (100),
wherein the electropneumatic parking brake module (100) is designed to provide the shut-off signal (SA) when, in the event of a fault in the rear axle service brake control, the further axle (VA, ZA) is controlled by normal operation of a further axle modulator (116, 118) or a pneumatic redundancy mode of the further axle modulator or an electropneumatic redundancy module (120), comprising the steps of:
- receiving a redundant parking brake signal (SR) at the electronic control unit (ECU), wherein the redundant parking brake signal (SR) indicates or requests that redundant control of service brakes of the further axle is carried out, and
- providing the shut-off signal (SA) to the shut-off valve (10).

18. Method according to claim 17, comprising the steps of:
- receiving a parking brake signal (S2) from an electronic parking brake switch (HCU) for releasing spring-loaded brakes (6, 7); and
- providing the shut-off signal (SA) to the shut-off valve (10) for modulating the supply pressure (pV) at the second spring-loaded connection (5).

## Revendications

1. Système de freinage (200) pneumatique à commande électronique pour un véhicule, en particulier un véhicule utilitaire, comportant
un module central (110) permettant de commander le système de freinage (200) et comprenant une commande de frein de service d'essieu arrière,
au moins un premier circuit de freinage (102, 104) et un circuit de freinage de stationnement (106),
un agencement de frein d'immobilisation (1) électropneumatique comportant des premiers freins à accumulateur à ressort (6) sur un essieu arrière (HA) et des seconds freins à accumulateur à ressort (7) d'un autre essieu (VA, ZA) comportant
une soupape d'arrêt (10), et
un module de frein d'immobilisation (100),
dans lequel le module de frein d'immobilisation (100) présente
un raccord de réserve (2) pour le raccordement à une réserve d'air comprimé (3),
un premier raccord d'accumulateur à ressort (4) pour le raccordement de la soupape d'arrêt (10),
une unité à soupape (8) électropneumatique comportant au moins une soupape électropneumatique pour la diffusion d'une pression de freinage d'accumulateur à ressort (pF) au niveau du premier raccord d'accumulateur à ressort (4), et
une unité de commande électronique (ECU) destinée à recevoir des signaux de frein d'immobilisation (S1, S2, SR) provenant d'un commutateur de frein d'immobilisation (HCU) électronique et/ou d'une unité de commande (110) de niveau supérieur,
dans lequel la soupape d'arrêt (10) présente un second raccord d'accumulateur à ressort (5) pour le raccordement de freins à accumulateur à ressort (7) de l'autre essieu (VA, ZA) et arrête le second raccord d'accumulateur à ressort (5) en fonction d'un signal d'arrêt (SA) fourni par le module de frein d'immobilisation (100), **caractérisé en ce que**
le module de frein d'immobilisation (100) électropneumatique est configuré pour fournir le signal d'arrêt (SA) lorsque, en cas de défaillance de la commande de frein de service d'essieu arrière, une commande de l'autre essieu (VA, ZA) est exécutée par un fonctionnement normal d'un autre modulateur d'essieu (116, 118) ou d'un module de redondance pneumatique de l'autre modulateur d'essieu ou un module de redondance (120) électropneumatique, dans lequel l'unité de commande électronique (ECU) est configurée pour recevoir un signal de frein d'immobilisation (SR) redondant qui indique qu'une commande redondante de freins de service de l'autre essieu est exécutée ou demande qu'elle soit exécutée, et dans ce cas, l'unité de commande électronique (ECU) fournit le signal d'arrêt (SA) à la soupape d'arrêt (10).

2. Système de freinage (200) pneumatique à commande électronique selon la revendication 1, dans lequel des freins à accumulateur à ressort (6) d'un essieu arrière (HA) peuvent être raccordés au premier raccord d'accumulateur à ressort (4).

3. Système de freinage (200) pneumatique à commande électronique selon la revendication 1, dans lequel le module de frein d'immobilisation (100) présente un raccord d'essieu arrière (15) séparé pour des freins à accumulateur à ressort (6) d'un essieu arrière (HA).

4. Système de freinage (200) pneumatique à commande électronique selon l'une des revendications précédentes, dans lequel la soupape d'arrêt (10) peut être commutée de manière électromagnétique et le signal d'arrêt (SA) est un signal électronique fourni par l'unité de commande électronique (ECU).

5. Système de freinage (200) pneumatique à commande électronique selon l'une des revendications précédentes, dans lequel la soupape d'arrêt (10) présente une première position de commutation dans laquelle la pression de freinage d'accumulateur à ressort (pF) peut être appliquée aux freins à accumulateur à ressort (7) de l'autre essieu (VA), et une seconde position de commutation dans laquelle les freins à accumulateur à ressort (7) de l'autre essieu (VA, ZA) restent ventilés indépendamment de la pression de freinage d'accumulateur à ressort (pF).

6. Système de freinage (200) pneumatique à commande électronique selon la revendication 5, dans lequel la soupape d'arrêt (10) est prévue pour diffuser, dans la seconde position de commutation, une pression de réserve (pV) aux freins à accumulateur à ressort (7) de l'autre essieu (VA, ZA).

7. Système de freinage (200) pneumatique à commande électronique selon la revendication 6, dans lequel la soupape d'arrêt (10) est conçue comme une soupape à 3/2 voies (11).

8. Système de freinage (200) pneumatique à commande électronique selon la revendication 7, dans lequel la soupape d'arrêt (10) présente un premier raccord de soupape à 3/2 voies (11.1) relié au premier raccord d'accumulateur à ressort (4), un deuxième raccord de soupape à 3/2 voies (11.2) formant le second raccord d'accumulateur à ressort (5) ou relié à celui-ci et un troisième raccord de soupape à 3/2 voies (11.3) relié ou pouvant être relié à la ou à une réserve d'air comprimé (3), et dans lequel, dans la première position de commutation, le premier raccord de soupape à 3/2 voies (11.1) est relié au deuxième raccord de soupape à 3/2 voies (11.2), et dans la seconde position de commutation, le deuxième raccord de soupape à 3/2 voies (11.2) est relié au troisième raccord de soupape à 3/2 voies (11.3).

9. Système de freinage (200) pneumatique à commande électronique selon la revendication 5, dans lequel la soupape d'arrêt (10) est prévue pour bloquer, dans la seconde position de commutation, une pression des freins à accumulateur à ressort (7) de l'autre essieu (VA, ZA).

10. Système de freinage (200) pneumatique à commande électronique selon la revendication 9, dans lequel la soupape d'arrêt (10) est conçue comme une soupape à 2/2 voies (12).

11. Système de freinage (200) pneumatique à commande électronique selon la revendication 10, dans lequel la soupape d'arrêt (10) présente un premier raccord de soupape à 2/2 voies (12.1) relié au premier raccord d'accumulateur à ressort (4), et un second raccord de soupape à 2/2 voies (12.2) formant le second raccord d'accumulateur à ressort (5) ou relié à celui-ci, et dans lequel, dans la première position de commutation, le premier raccord de soupape à 2/2 voies (12.1) est relié au second raccord de soupape à 2/2 voies (12.2), et dans la seconde position de commutation, le premier raccord de soupape à 2/2 voies (12.1) et le second raccord de soupape à 2/2 voies (12.2) sont séparés.

12. Système de freinage (200) pneumatique à commande électronique selon l'une des revendications précédentes, dans lequel l'unité de commande électronique (ECU) est configurée pour ne pas émettre le signal d'arrêt (SA) lorsqu'un signal de frein d'immobilisation (S1) du commutateur de frein de stationnement (HCU) électronique est reçu pour l'enclenchement des freins d'immobilisation (6, 7).

13. Système de freinage (200) pneumatique à commande électronique selon la revendication 6, dans lequel l'unité de commande électronique (ECU) est configurée pour fournir le signal d'arrêt (SA) à la soupape d'arrêt (10) lorsqu'un signal de frein d'immobilisation (S2) du commutateur de frein de stationnement (HCU) électronique est reçu pour le relâchement des freins d'immobilisation (6, 7).

14. Système de freinage (200) pneumatique à commande électronique selon l'une des revendications précédentes, dans lequel la soupape d'arrêt (10) est intégrée dans le module de frein d'immobilisation (100) électropneumatique.

15. Système de freinage (200) pneumatique à commande électronique selon l'une des revendications 1 à 13 précédentes, dans lequel la soupape d'arrêt (10) est bridée à un boîtier du module de frein d'immobilisation (100) électropneumatique.

16. Système de freinage (200) pneumatique à commande électronique selon l'une des revendications 1 à 13 précédentes, dans lequel la soupape d'arrêt (10) est montée séparément et à distance du module de frein d'immobilisation (100) électropneumatique.

17. Procédé permettant de commander un système de freinage (200) pneumatique à commande électronique pour un véhicule, en particulier un véhicule utilitaire, comportant
un module central (110) permettant de commander le système de freinage (200) et comprenant une commande de frein de service d'essieu arrière,
au moins un premier circuit de freinage (102, 104) et un circuit de freinage de stationnement (106),
un agencement de frein d'immobilisation (1) électropneumatique comportant des premiers freins à accumulateur à ressort (6) sur un essieu arrière (HA) et des seconds freins à accumulateur à ressort (7) d'un autre essieu (VA, ZA) comportant
une soupape d'arrêt (10), et
un module de frein d'immobilisation (100),
dans lequel le module de frein d'immobilisation (100) présente
un raccord de réserve (2) pour le raccordement à une réserve d'air comprimé (3),
un premier raccord d'accumulateur à ressort (4) pour le raccordement de la soupape d'arrêt (10),
une unité à soupape (8) électropneumatique comportant au moins une soupape électropneumatique pour la diffusion d'une pression de freinage d'accumulateur à ressort (pF) au niveau du premier raccord d'accumulateur à ressort (4), et
une unité de commande électronique (ECU) destinée à recevoir des signaux de frein d'immobilisation (S1, S2, SR) provenant d'un commutateur de frein d'immobilisation (HCU) électronique et/ou d'une unité de commande (110) de niveau supérieur,
dans lequel la soupape d'arrêt (10) présente un second raccord d'accumulateur à ressort (5) pour le raccordement de freins à accumulateur à ressort (7) de l'autre essieu (VA, ZA) et arrête le second raccord d'accumulateur à ressort (5) en fonction d'un signal d'arrêt (SA) fourni par le module de frein d'immobilisation (100),
dans lequel le module de frein d'immobilisation (100) électropneumatique est configuré pour fournir le signal d'arrêt (SA) lorsque, en cas de défaillance de la commande de frein de service d'essieu arrière, une commande de l'autre essieu (VA, ZA) est exécutée par un fonctionnement normal d'un autre modulateur d'essieu (116, 118) ou d'un module de redondance pneumatique de l'autre modulateur d'essieu ou un module de redondance (120) électropneumatique, comportant les étapes consistant à :
- recevoir un signal de frein d'immobilisation (SR) redondant au niveau de l'unité de commande électronique (ECU), dans lequel le signal de frein d'immobilisation (SR) redondant indique qu'une commande redondante de freins de service de l'autre essieu est exécutée ou demande qu'elle soit exécutée, et
- fournir le signal d'arrêt (SA) à la soupape d'arrêt (10).

18. Procédé selon la revendication 17, comprenant les étapes consistant à :
- recevoir un signal de frein d'immobilisation (S2) provenant d'un commutateur de frein de stationnement (HCU) électronique pour le relâchement des freins à accumulateur à ressort (6, 7) ; et
- fournir le signal d'arrêt (SA) à la soupape d'arrêt (10) pour la diffusion de la pression de réserve (pV) au niveau du second raccord d'accumulateur à ressort (5).
